# EUROPEAN PATENT SPECIFICATION

(11) **EP 2 050 370 B1**
(45) Date of publication and mention of the grant of the patent: **21.07.2010**
(21) Application number: 07425654.6
(22) Date of filing: 18.10.2007
(51) Int. Cl.: A47J 31/44

(54) **Coffee machine**
Kaffeemaschine
Machine à café

(43) Date of publication of application: 22.04.2009
(73) Proprietor: Gruppo Cimbali S.p.A., 20082 Binasco (MI) (IT)
(72) Inventor: Volonte', Claudio, 21047 Saronno (VA) (IT)
(74) Representative: Bonvicini, Davide

(56) References cited:
- EP-A- 1 639 926
- CH-A- 315 837
- US-A- 6 082 246
- US-A1- 2003 029 322

## Description

The present invention relates to a coffee machine, in particular for espresso coffee, suitable for using containers which have varying heights ranging between a minimum and maximum height, said machine comprising a base structure provided with a horizontal surface for supporting the containers and a structure which extends vertically upwards, from the base structure, for supporting at least one filter-holder unit with an associated spout for dispensing the coffee, said structure which extends vertically from the base determining positioning of the said filter-holder unit at a distance from the said container support surface so as to allow correct positioning of containers having a maximum height which is compatible with the machine.

As is known, the spread of espresso coffee machines to an increasingly larger number of countries around the world characterized by different cultures in terms of coffee drinking habits has resulted in a great variety of ways of preparing espresso coffee. These different preparation methods range, for example, from the use of a small cup for Neapolitan espresso, which on average is about 5 or 6 cm high, to the use of a large 10-ounce American-style cup, with a volume of about 300 cm³, which may be even higher than 15 cm.

To ensure, in either of these cases, that each type of beverage is prepared with the maximum quality, it is necessary for various modifications to be made during the process of extracting the beverage from the coffee powder. These have resulted in the development, for espresso coffee machines, of a large number of specific technical and constructional solutions.

One requirement in terms of quality, for example, is to achieve the maximum homogeneity in terms of the creamy surface texture of an Italian espresso coffee and to preserve as far as possible the correct temperature conditions associated therewith.

For this purpose it is necessary for the ceramic cup, inside which the coffee must be dispensed, after heating to the correct temperature, to be situated at as small a distance as possible from the dispensing spout of the filter holder. Therefore, espresso coffee machines destined for the Mediterranean markets are characterized by dispensing spouts which are positioned at heights varying from 70 to 90 mm from the cup supporting surface. On the other hand, in an espresso coffee machine destined for the north American market, in order to be able to accommodate the large paper or polystyrene containers with a capacity of more than 300 cm³, the dispensing spouts must be positioned at about 160 mm distance from the container support surface. In order to position the dispensing units very high up on the front of the machine it was necessary, according to the known art, to manufacture machines with a raised frame structure compared to the product destined for the European market, with a consequent lengthening also of parts of the bodywork. In fact, according to the known art, it was required to produce two significantly different machines. The need to eliminate this drawback has resulted in the manufacture of machines with varying distances between the container support surface and the dispenser spouts, in an attempt to find solutions suitable for adapting the machines to the various situations.

One solution to the problem is described in EP 1,752,938 Al. This is undoubtedly useful for ensuring more flexible production of the machines, but it still involves determining different heights of the dispensing spouts at the time of manufacture and therefore basically the production of two different types of machine. Another known solution consists in inserting, into a machine designed for high containers, retractable auxiliary supports to be used for low containers, as for example described in EP 1,738,676 A1. However, this known solution also has the drawback that it requires inside the machine a sufficient amount of space to accommodate the sliding mechanisms of the retractable auxiliary surfaces, which space is not always available. Moreover it also requires the use of relatively costly devices for moving the retractable surfaces, which are therefore not particularly compatible with low-cost coffee machines.

According to another known solution, as disclosed on EP-A-1,639,926 and in US-A-2003/0029322, the container support surface is made displaceable vertically to and from the filter-holder unit of the machine by means of sliding mechanisms in order to be adjusted in at least two different positions and to be able to support cups having different height.

However,- also with the above mentioned prior art the drawback of requiring large space inside the vertical frame of the machine for housing the sliding mechanisms can not be avoided.

The problem underlying the present invention is to provide an espresso coffee machine which satisfies the need to use large containers, characteristic of the north American market, and which, at the same time, is suitable for using small containers, resulting in both cases in a beverage having the typical organoleptic properties of an espresso coffee with a creamy surface layer which is highly appealing in appearance.

The problem is solved with a machine which is characterized in accordance with Claim 1 which follows.

The invention will now be described more fully with reference to an example of embodiment thereof provided solely by way of a non-limiting example and illustrated in the accompanying drawings where:
Figure 1 shows a schematic side view of a coffee machine with a container support surface in its position situated furthest away from the coffee dispensing spouts for use with high containers;
Figure 2 shows a schematic side view of the machine according to Figure 1 with the container support surface in its position closer to the dispensing spouts for use with containers with a relatively lower height;
Figures 3a and 3b show two different perspective views from below, partly sectioned, of the basin forming the coffee container support surface;
Figure 4 shows a partly cross-sectioned view of the machine with container support surface in the position according to Figure 1;
Figure 4a shows a partly cross-sectioned view of a detail of the support surface according to Figure 4;
Figure 5 shows a partly cross-sectioned view of the machine with the container support surface in the position according to Figure 2;
Figure 5a shows a partly cross-sectioned view of a detail of the support surface according to Figure 5;
Figures 6 and 7 show respective spacers of varying length for imparting to the container support surface respective positions vertically spaced from each other.

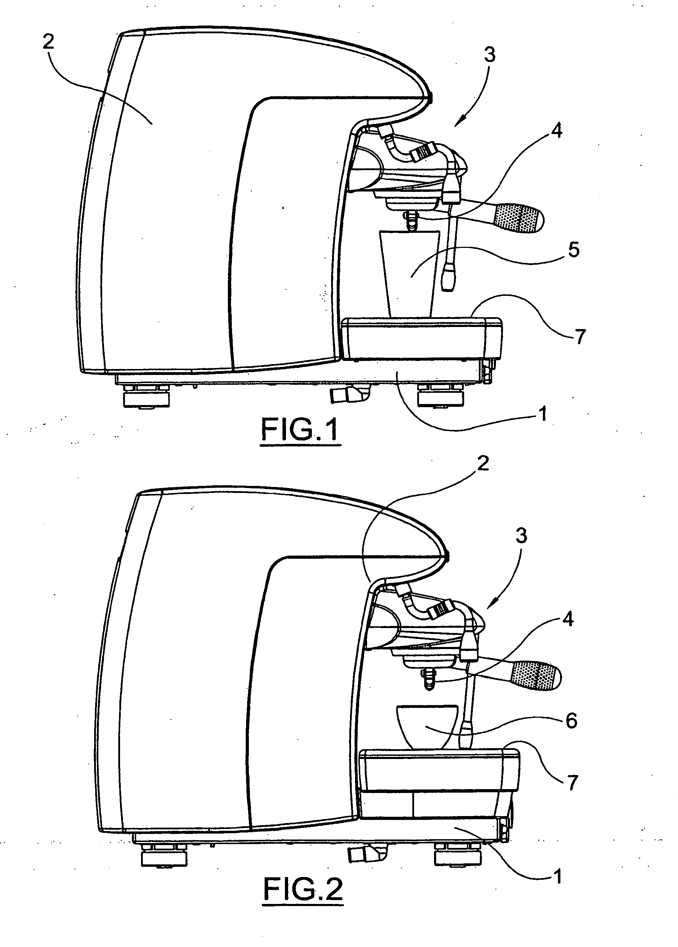

With reference to the abovementioned figures and in particular to Figures 1 and 2, it can be seen that the coffee machine comprises a base structure - denoted overall by 1 - which has, extending therefrom, a vertical structure, denoted overall by 2, which supports a conventional filter-holder unit, denoted overall by 3, for preparing and dispensing coffee.

Although only one filter-holder unit is visible in the figures, it is understood that there may also be more than one of such units in the machine.

The prepared coffee is received by a container situated underneath the dispensing spouts, denoted by 4.

The base structure is conventionally provided with support feet 1a and at least one discharge nozzle 1b.

In Figure 1 the coffee receiving container is denoted by 5, while in Figure 2 the container is denoted by 6.

While the container 5 is a large high cup, for coffee of the north American type, for example with a capacity of about 300 cm³, the receiving container 6 is a small low cup, which is typically used for espresso coffee of the European or Neapolitan type.

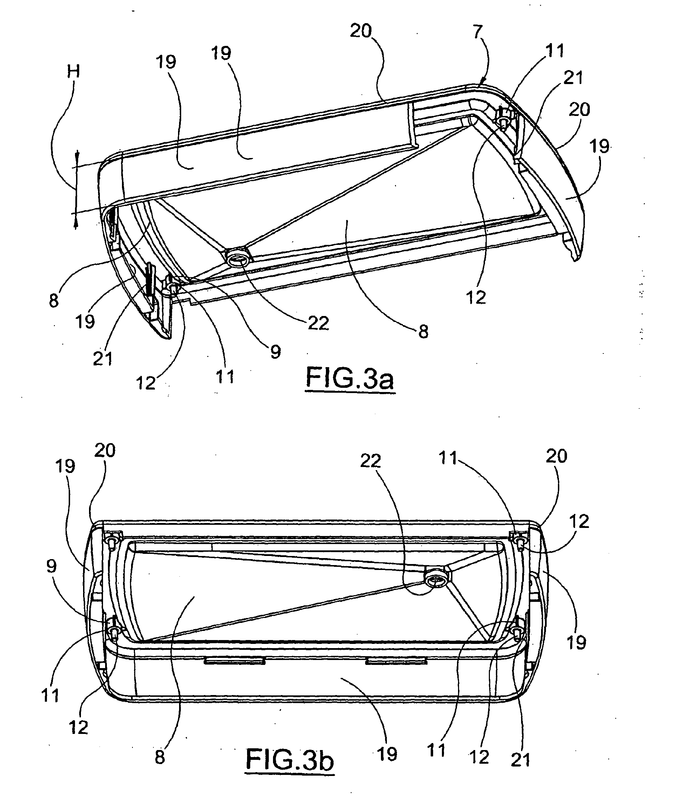

The base structure 1 of the machine has, positioned thereon, a container support surface 7 in the form of a basin, shown in a partial perspective view from the bottom 8 thereof, in Figures 3a and 3b.

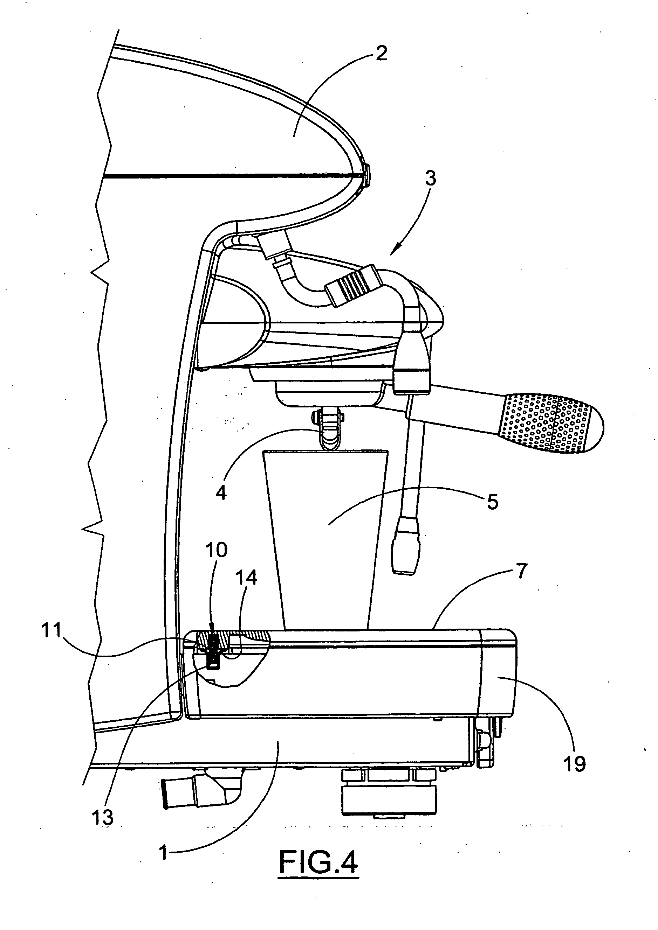

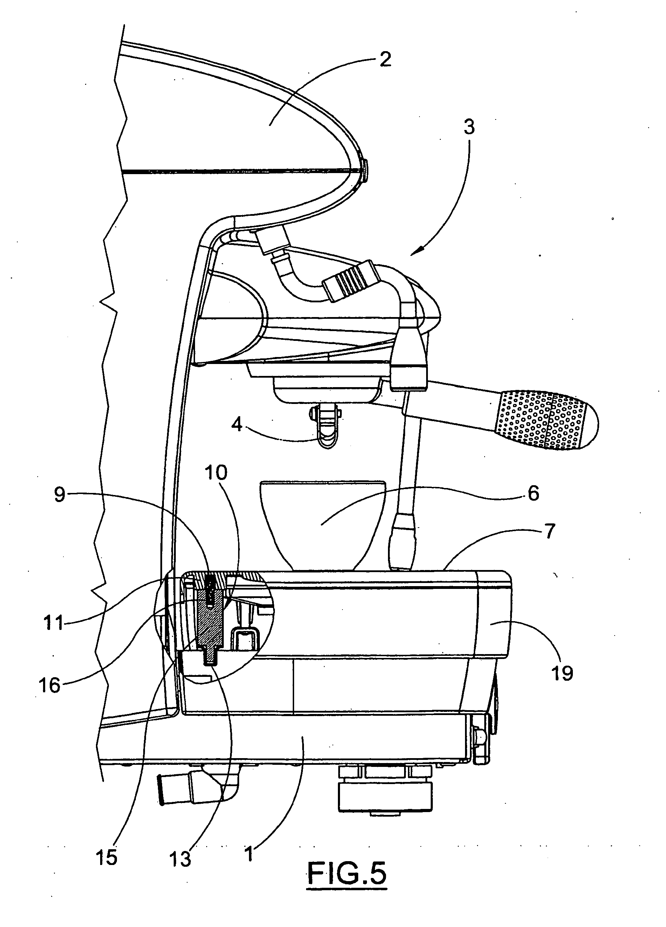

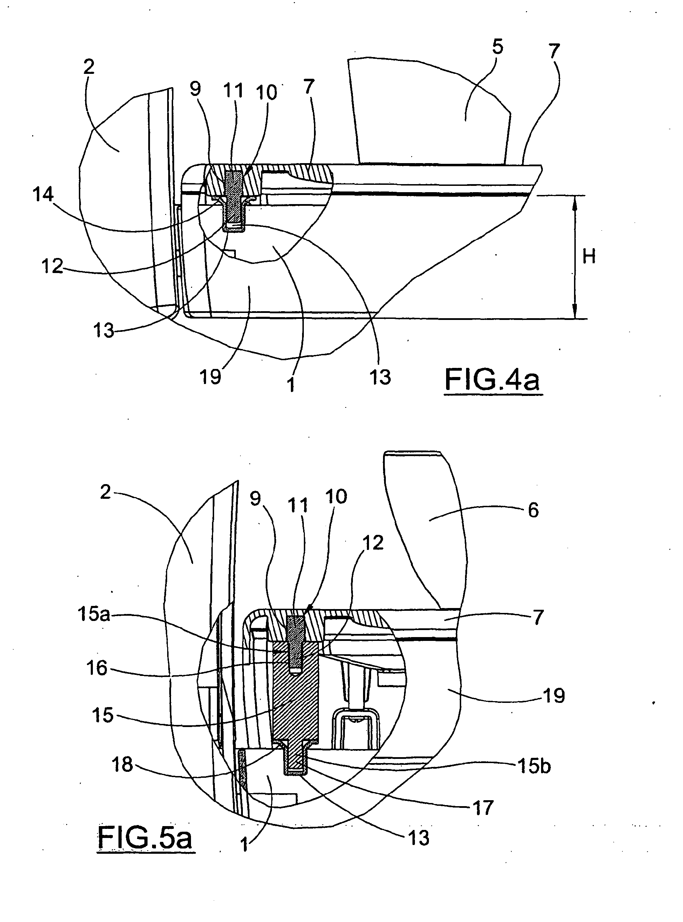

The support surface 7 is provided in its bottom part 8 directed towards the base structure 1 with a plurality of hollow seats, such as those denoted by 9 in Figures 4 and 5. These seats 9 house respective spacers which are denoted overall by 10 and visible both in Figure 4 and in Figure 5 and in particular in Figures 4a and 5a.

With reference to Figures 4 and 4a, it can be seen that these spacers 10 comprise a first rod-shaped piece 11, preferably with a circular cross-section, which engages inside the respective seat 9, as well as a threaded shank 12 which projects axially from the piece 11 towards the base structure 1.

In the position shown in Figures 4 and 4a, the shank 12 of each rod-shaped piece 11 or spacer 10 engages inside a respective hollow seat 3 formed in the base structure 1.

A bearing seat 14 is formed around the free end of the first rod-shaped piece from which the threaded shank 12 extends and, in the example shown in the drawings, consists of an annular zone around the threaded shank 12. As can be seen in Figures 4 and 4a, by defining a given value for the length of the section of the rod-shaped piece 11 between the bearing seat 14 and its free end inserted in the seat 9, a corresponding position of the surface 7 with respect to the coffee dispensing spouts 4 is determined, this allowing, for example, the use of a container of the high type, such as that denoted by 5.

The surface 7 is in fact stably supported on the base structure 1 in its lowest position situated furthest from the dispensing spouts 4.

In accordance with the invention, the spacers 10 may also comprise a second rod-shaped piece - denoted by 15 and shown in greater detail in Figures 5a, 6 and 7 - which is provided, at its end 15a, with a threaded hole 16 which forms second axial engagement means, the first means consisting of the threaded shank 12 of the first rod-shaped piece 11 (Figures 5 and 5a).

At the opposite end 15b, the second rod-shaped piece 15 is provided with a respective shank 17, not necessarily threaded, and with a bearing seat 18 defined by the annular zone around the shank 17 depending on the different diameters of the rod-shaped piece 15 and the shank 17.

By coupling together axially the rod-shaped piece 15 with the rod-shaped piece 11, by means of engagement of the threaded shank 12 inside the threaded hole 16, a spacer 10 with an axial length greater than that which would have been obtained with the first rod-shaped piece 11 alone is achieved. Insertion of the shank 17 inside the seats 13 of the base structure 1 results in a different position of the support surface 7 with respect to the dispensing spouts 4, depending on the length of the rod-shaped piece 15 measured between its end 15a and the bearing seat 18.

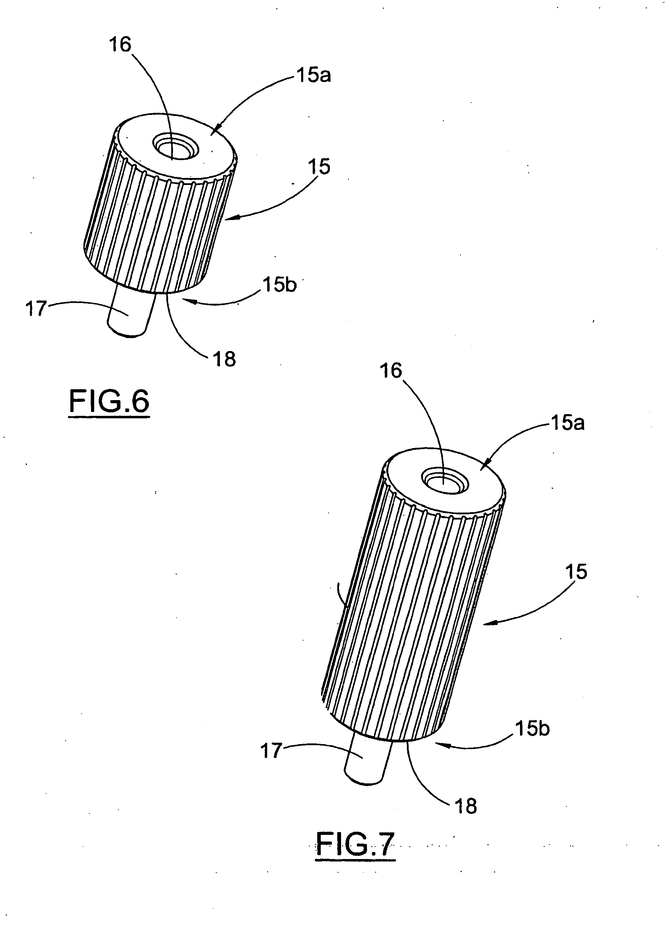

The second rod-shaped piece 15 may be provided with different axial lengths, so as to allow different positions of the support surface 7, and also with different diameters. Figures 6 and 7 show two different forms of the second rod-shaped piece 15, the one shown in Figure 7 corresponding to that shown in Figures 5 and 5a. In particular, with engagement of the second rod-shaped piece 15 with the first piece 11, the surface 7 is positioned, relative to the dispensing spouts 4, at an optimum distance for the use of low containers, typically in the form of a ceramic cup such as that shown in Figures 2 and 5.

Since the surface 7 must assume, in the machine, at least two positions which are vertically spaced from each other, the surface 7 comprises a rim 19 which is fixed to its edge 20 by means of screw members - not shown in that conventional - which engage inside small lugs 21 integral with the surface 7 and projecting from the bottom 8 thereof.

The rim 19 has a predetermined vertical height H so as to be able to cover the underlying base structure 1 even when the surface 7 is situated in its highest position towards the dispensing spouts 4.

Since it is formed as a separate structure, independent of the surface 7, the rim 19 may be made of a material which is different from that conventionally used for the surface 7 which must also withstand any wetting with boiling water and therefore must be particularly resistant to high temperatures.

The surface 7 which, as mentioned above, is in the form of a basin, has its bottom 8 formed in the manner of a wall inclined towards a conventional discharge opening 22.

From the above description it can be understood that the machine in accordance with the present invention may be adapted to the use of high containers and the use of low containers depending on the type of coffee to be dispensed, while maintaining constantly an optimum distance between the beverage dispensing spouts and the surface level of the beverage which, towards the end of dispensing, is reached inside the receiving container.

## Claims

1. Coffee machine, in particular for espresso coffee, suitable for using containers (5, 6) which have varying heights ranging between a minimum and maximum height, said machine comprising a base structure (1) provided with a horizontal surface (7) for supporting the containers and a structure (2) which extends vertically upwards, from the base structure, for supporting at least one filter-holder unit (3) with an associated spout (4) for dispensing the coffee, said structure (2) which extends vertically from the base determining positioning of said filter-holder unit (3) at a distance from said container support surface (7) so as to allow correct positioning of containers having a maximum height which is compatible with the machine, said horizontal surface (7) for supporting the containers (5, 6) being displaceable vertically with respect to said base structure (1) and comprising means (10) for firm positioning thereof in at least two positions vertically spaced from each other
**characterized in that** said means for firm positioning of the said surface (7) supporting the containers (5, 6) comprise a plurality of spacers (10) which can be connected in a removable manner to the said container support surface (7) and are positioned between the surface (7) itself and the said base structure (1).

2. Machine according to Claims 1, **characterized in that** each spacer (10) of the plurality of spacers comprises a first rod-shaped piece (11) with one end connected to the said container support surface (7) and projecting towards said base structure (1) with its free end, said free end being provided with first axial engagement means (12) and with a bearing seat (14) for engagement with the said base structure (1), the axial length of the section of said first rod-shaped piece (11) situated between the said support surface (7) and the said bearing seat (14) determining the position of the surface (7) for supporting containers having a greater height (5).

3. Coffee machine according to Claim 2, **characterized in that** said first axial engagement means of the first rod-shaped piece (11) comprise a threaded shank (12) projecting axially from the end directed towards said base structure (1).

4. Machine according to Claim 2, **characterized in that** each spacer (10) of the said plurality of spacers comprises a second rod-shaped piece (15) provided, at one of its ends (15a), with second axial engagement means (16) which can be engaged with the said first axial engagement means (12) of the said first rod-shaped piece (11) and provided, at its opposite end (15b), with a bearing seat (18) for engagement with the said base structure (1), the axial length of the said second rod-shaped piece (15), when engaged with the said first rod-shaped piece (11), determining the position of the support surface (7) for containers (6) having a minimum height or intermediate height between the maximum and minimum heights.

5. Coffee machine according to Claim 4, **characterized in that** said second axial engagement means of said second rod-shaped piece (15) comprise an axial threaded hole (16), said threaded hole (16) being able to receive said shank (12) of the first engagement means of the first rod-shaped piece (11).

6. Coffee machine according to any one of Claims 1 to 5, **characterized in that** the said support surface (7) for coffee containers comprises a basin which is provided with a perimetral rim (19) extending horizontally along at least the contour visible from outside the machine and vertically along a predetermined section (H) sufficient to cover at least partially the contour of the said base structure (1), whatever the position of the container support surface (7) with respect to the filter-holder unit (3) .

7. Coffee machine according to Claim 6, **characterized in that** said perimetral rim (19) is a part separate from the said container support surface and is fixed to the edge of the latter by means of removable fixing members.

8. Coffee machine according to Claim 7, **characterized in that** said perimetral rim (19) is made of a material different from the material from which the said surface (7) supporting the containers (5, 6) is made.

## Patentansprüche

1. Kaffeemaschine, insbesondere für Espressokaffee, geeignet für die Verwendung von Behältern (5, 6), die unterschiedliche Höhen besitzen, die von einer minimalen bis zu einer maximalen Höhe reichen, wobei die Maschine eine Basisstruktur (1), die mit einer horizontalen Oberfläche (2) zum Tragen der Behälter versehen ist, und eine Struktur (2) umfaßt, die sich vertikal aufwärts von der Basisstruktur erstreckt, um wenigstens eine Filterträgereinheit (3) mit einem zugeordneten Auslauf (4) zum Abgeben von Kaffee zu tragen, wobei die Struktur (2), die sich vertikal von der Basisstruktur erstreckt, die Positionierung der Filterträgereinheit (3) in einem Abstand von der Behältertrageoberfläche (7) bestimmt, um das korrekte Positionieren von Behältern mit einer maximalen Höhe, die mit der Maschine kompatibel ist, zu erlauben, wobei die horizontale Oberfläche (7) zum Tragen der Behälter (5, 6) relativ zu der Basisstruktur (1) vertikal verschieblich ist und Mittel (10) umfaßt, um sie in wenigstens zwei vertikal von einander beanstandeten Positionen sicher zu positionieren,
**dadurch gekennzeichnet,**
**daß** die Mittel zum sicheren Positionieren der Oberfläche (7), die die Behälter (5, 6) trägt, eine Mehrzahl von Abstandshaltern (10) umfassen, die in entfernbarer Weise mit der behältertragenden Oberfläche (7) verbunden werden können und die zwischen der Oberfläche (7) selbst und der Basisstruktur (1) angeordnet werden.

2. Kaffeemaschine nach Anspruch 1, **dadurch gekennzeichnet, daß** jeder Abstandshalter (10) der Mehrzahl von Abstandshaltern ein erstes stabförmiges Teil (11) umfaßt, dessen eines Ende mit der behältertragenden Oberfläche (7) verbunden ist und dessen freies Ende in Richtung auf die Basisstruktur (1) vorspringt, wobei das freie Ende mit ersten axialen Eingriffsmitteln (12) und einem Lagersitz (14) zum In-Eingriff-Kommen mit der Basisstruktur (1) versehen ist, wobei die axiale Länge des zwischen der tragenden Oberfläche (7) und dem Lagersitz (14) angeordneten Abschnittes des ersten stabförmigen Teils (11) die Position der Oberfläche (7) bestimmt, um Behälter (5) zu tragen, die eine größere Höhe besitzen.

3. Kaffeemaschine nach Anspruch 2, **dadurch gekennzeichnet, daß** die ersten axialen Eingriffsmittel des ersten stabförmigen Teils (11) einen Gewindeschafft (12) umfassen, der axial von dem auf die Basisstruktur (1) gerichteten Ende vorspringt.

4. Kaffeemaschine nach Anspruch 2, **dadurch gekennzeichnet, daß** jeder Abstandshalter (10) der Mehrzahl von Abstandshaltern ein zweites stabförmiges Teil (15) umfaßt, das an einem seiner Enden (15a) mit zweiten axialen Eingriffsmitteln (16) versehen ist, die mit den ersten axialen Eingriffsmitteln (12) des ersten stabförmigen Teils (11) in Eingriff kommen können, und das an seinem gegenüberliegenden Ende (15b) mit einem Lagersitz (18) zum In-Eingriff-Kommen mit der Basisstruktur (1) versehen ist, wobei die axiale Länge des zweiten stabförmigen Teils (15), wenn es mit dem ersten stabförmigen Teil (11) in Eingriff ist, die Position der tragenden Oberfläche (7) für Behälter (6) mit einer minimalen Höhe oder einer Zwischenhöhe zwischen der maximalen und der minimalen Höhe bestimmt.

5. Kaffeemaschine nach Anspruch 4, **dadurch gekennzeichnet, daß** die zweiten axialen Eingriffsmittel des zweiten stabförmigen Teils (15) eine axiale Gewindebohrung (16) umfassen, wobei die Gewindebohrung (16) in der Lage ist, den Gewindeschafft (12) der ersten Eingriffsmittel des ersten stabförmigen Teils (11) aufzunehmen.

6. Kaffeemaschine nach einem der Ansprüche 1 bis 5, **dadurch gekennzeichnet, daß** die tragende Oberfläche (7) für Kaffeebehälter ein Becken umfaßt, das mit einem umlaufenden Rand (19) versehen ist, der sich horizontal zumindest entlang der von außerhalb der Maschine sichtbaren Kontur und der sich vertikal entlang eines vorbestimmten Abschnittes (H) erstreckt, der ausreichend ist, um zumindest partiell die Kontur der Basisstruktur (1) in jeder beliebigen Position der behältertragenden Oberfläche (7) relativ zu dem Filterträger (3) abzudecken.

7. Kaffeemaschine nach Anspruch 6, **dadurch gekennzeichnet, daß** der umlaufende Rand (19) ein von der behältertragenden Oberfläche separiertes Teil ist, das am Rand der letzteren mittels entfernbarer Befestigungselemente befestigt ist.

8. Kaffeemaschine nach Anspruch 7, **dadurch gekennzeichnet, daß** der umlaufende Rand (19) aus einem Material hergestellt ist, das sich von dem Material unterscheidet, aus dem die Oberfläche (7), die die Behälter (5, 6) trägt, hergestellt ist.

## Revendications

1. Machine à café, en particulier pour café espresso, apte à utiliser des récipients (5, 6) de hauteurs différentes allant d'une hauteur minimale à une hauteur maximale, ladite machine comprenant une structure de base (1) pourvue d'une surface horizontale (7) de support des récipients, ainsi qu'une structure (2) s'étendant verticalement vers le haut à partir de ladite structure de base afin de supporter au moins une unité porte-filtre (3) avec un bec (4) de distribution de café, ladite structure (2) qui s'étend verticalement à partir de la structure de base déterminant le positionnement de ladite unité porte-filtre (3) à une distance de la surface de support de récipient (7) afin de permettre le positionnement correct de récipients ayant une hauteur maximale qui est compatible avec la machine, la surface horizontale (7) de support des récipients (5, 6) étant déplaçable verticalement par rapport à ladite structure de base (1) et comprenant des moyens (10) pour son positionnement stable dans au moins deux positions espacées verticalement l'une de l'autre.
**caractérisée par le fait**
**que** les moyens de positionnement stable de ladite surface (7) supportant les récipients (5, 6) comprennent une pluralité d'écarteurs (10) qui peuvent être reliés de manière amovible à ladite surface (7) de support de récipient et qui sont disposés entre la surface (7) elle-même et ladite structure de base (1).

2. Machine à café selon la revendication 1, **caractérisée par le fait que** chaque écarteur (10) de la pluralité d'écarteurs comprend une première partie en forme de tige (11) dont une extrémité est reliée à la surface (7) de support de récipient et dont l'extrémité libre fait saillie en direction de la structure de base (1), ladite extrémité libre étant pourvue de premiers moyens axiaux d'engrènement (12) et d'un siège de logement (14) pour un engrènement avec ladite structure de base (1), la longueur axiale de la section de la première partie en forme de tige (11), qui est située entre la surface de support (7) et le siège de logement (14) déterminant la position de ladite surface (7) pour supporter des récipients (5) présentant une hauteur plus importante.

3. Machine à café selon la revendication 2, **caractérisée par le fait que** lesdits premiers moyens axiaux d'engrènement de la première partie en forme de tige (11) comprennent une tige filetée (12) qui fait saillie axialement de l'extrémité dirigée vers la structure de base (1).

4. Machine à café selon la revendication 2, **caractérisée par le fait que** chaque écarteur (10) de la pluralité d'écarteurs comprend une deuxième partie en forme de tige (15) qui est pourvue, à l'une des ses extrémités (15a), de deuxièmes moyens axiaux d'engrènement (16) qui peuvent s'engrener avec les premiers moyens axiaux d'engrènement (12) de ladite première partie en forme de tige (11), et qui est pourvue, à son extrémité opposée (15b), d'un siège de logement (18) pour un engrènement avec la structure de base (1), la longueur axiale de la deuxième partie en forme de tige (15), lorsque celle-ci est en prise avec la première partie en forme de tige (11), déterminant la position de la surface de support (7) pour des récipients (6) présentant une hauteur minimale ou une hauteur intermédiaire entre les hauteurs maximale et minimale.

5. Machine à café selon la revendication 4, **caractérisée par le fait que** les deuxièmes moyens axiaux d'engrènement de la deuxième partie en forme de tige (15) comprennent un trou taraudé axial (16), ledit trou taraudé (16) étant apte à recevoir la tige filetée (12) des premiers moyens d'engrènement de la première partie en forme de tige (11).

6. Machine à café selon l'une quelconque des revendications 1 à 5, **caractérisée par le fait que** la surface de support (7) pour récipients de café comprend un bassin qui est pourvu d'une bordure périphérique (19) qui s'étend horizontalement au moins le long du contour visible depuis l'extérieur de la machine et verticalement le long d'une portion prédéterminée (H) suffisante pour recouvrir au moins partiellement le contour de la structure de base (1) dans n'importe quelle position de la surface de support de récipient (7) par rapport au porte-filtre (3).

7. Machine à café selon la revendication 6, **caractérisée par le fait que** ladite bordure périphérique (19) est une partie séparée de la surface de support de récipient, qui est fixée sur le bord de cette dernière au moyen d'éléments de fixation détachables.

8. Machine à café selon la revendication 7, **caractérisée par le fait que** ladite bordure périphérique (19) est réalisée dans une matière différente de la matière à partir de laquelle est faite la surface (7) supportant les récipients (5, 6).
